# EUROPEAN PATENT APPLICATION

(11) **EP 1 112 683 A2**
(43) Date of publication of application: **04.07.2001**
(21) Application number: 01200001.4
(22) Date of filing: 03.01.2001
(51) Int. Cl.: A01K 1/015

(54) **Floor panel having grooves, in particular for use in a pen floor**

(30) Priority: 03.01.2000 NL 1014007; 09.03.2000 NL 1014596
(71) Applicant: Swaans, Johannes Hermanus C. H., 5591 PW Heeze (NL)
(72) Inventor: Swaans, Johannes Hermanus C. H., 5591 PW Heeze (NL)
(74) Representative: Verhees, Godefridus Josephus Maria

(57) **Abstract**

A self-bearing floor element 1 of gravel concrete, for a stable floor, provided on the topside 3 with a slotted pattern 11, to prevent animals from slipping on the floor element.

For the discharge of manure there are openings 21 all the way through the floor element 1. The openings 21 extend from the topside 3 to the underside 5 of the floor element and are present on the topside 3 of the floor element 1 in the slots 19.

On a longitudinal side 9 the floor element 1 has a notch 23 for extra discharge of manure, with the surface of the notch 23 being smaller on the topside 3 of the floor element 1 than on the underside 5.

## Description

### BACKGROUND OF THE INVENTION:

### Field of the invention

The invention relates to a floor element, in particular for use in a stable floor, provided with a topside, which functions during use as a walking surface and is provided with a slotted pattern, and an underside, which floor element also has openings for the passage of manure going all the way through it, which openings extend from the topside of the floor element to the underside of the floor element. Such floor elements are particularly used in stable floors for cattle. The floor elements are usually above manure cellars and their ends rest on supports, usually walls, which are present in the cellars.

### Prior art

Such a floor element is known from Swiss patent number 241596. This known floor element is of wood and is used to place on a concrete floor or floor element. Its groove pattern and its openings, which run all the way through it, make the walking surface less slippery for the animals so that the chance of their slipping is considerably decreased. A stable floor with these floor elements, however, is more expensive than a conventional stable floor of concrete. In addition, the known floor element wears relatively quickly in comparison with a floor element of concrete.

### Summary of the invention

An objective of the invention is to provide a floor element of the type described in the preamble that when used in a stable floor saves money in comparison with when the known floor element is used in a stable floor. To this end the floor element according to the invention is characterised in that the floor element is chiefly of concrete and forms a self-bearing structure. Preferably the floor element according to the invention is of gravel concrete. By making the slotted floor element self-bearing a single floor element can be used and in addition to the self-bearing element a second slotted element is not necessary, such as is the case in the known floor element. This leads to a great cost reduction of the stable floor. Because the floor element according to the invention is also chiefly of concrete, it wears less quickly than the known floor element of wood, which leads to further cost reductions. Because gravel concrete has better characteristics for use in a stable floor than does ordinary concrete, a floor element of gravel concrete is more favourable.

It is remarked that from French patent number 467.239 a floor element of concrete with slots and openings is known, however, in this the openings do not run from the topside through to the underside, but they only run to the centre, where they end up in horizontal channels in the concrete element. This structure indeed meets the purpose but is much too complex in terms of production and therefore much more expensive.

An embodiment of the floor element according to the invention is characterised in that the sidewalls of the slots run downward toward each other. Preferably the cross diameter of the slots is virtually trapezium-shaped. Such a form of the slots has the advantage that it is self-cleaning if a manure scraper is passed over the floor element.

Another embodiment of the floor element according to the invention is characterised in that the slotted pattern comprises a first group of parallel straight slots, as well as a second group of parallel straight slots, which are at an angle with the slots of the first group, whereby the openings on the topside of the floor element are present in the slots outside the intersections of the slots of the first group with the slots of the second group. In terms of production this is more favourable than a floor element in which the openings are present in the intersections of the slots.

In the known floor element the slots are straight over each other and form a rectangular pattern. It has been noted that the risk of slipping is further decreased if the slots of the first group together with the slots of the second group form a rhombic pattern of which the angles are unequal to 90°.

For extra discharge of manure a further embodiment of the floor element is characterised in that the floor element has a notch lengthwise, which notch is at a distance from the cross sides of the floor element. Preferably the surface of the notch on the topside of the floor element is smaller than on the underside.

### Brief description of the drawings

The invention will be elucidated more fully below on the basis of drawings in which an embodiment of the floor element according to the invention is shown. In these drawings:
Figure 1 shows a perspective view of an embodiment of the floor element according to the invention; and
Figure 2 shows a detail of the floor element at the site of an opening in the floor element.

### Detailed description of the drawings

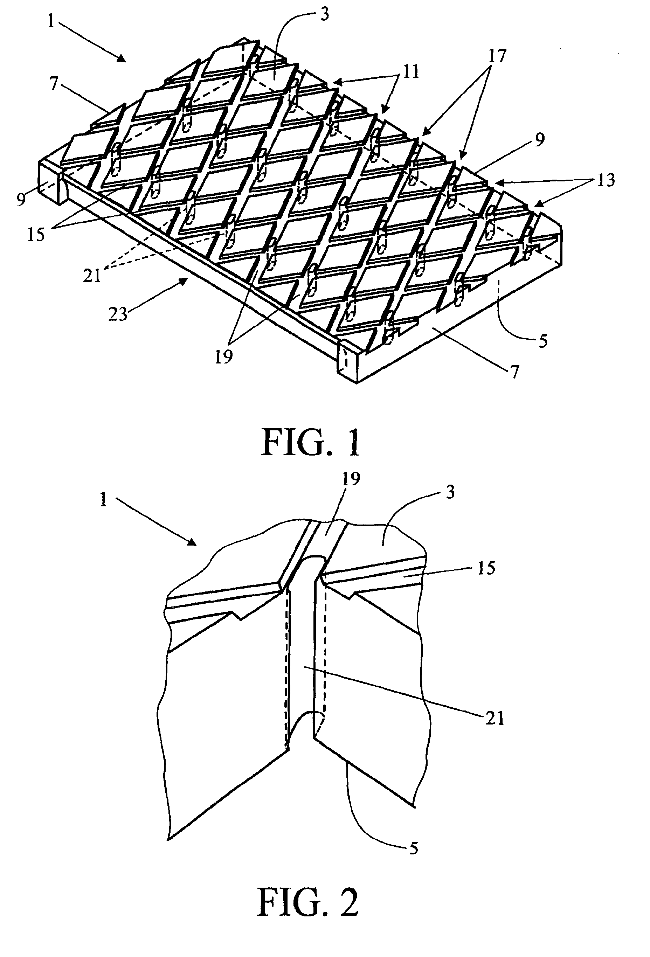

In Figure 1 an embodiment of the floor element according to the invention is shown in perspective. The floor element 1 is of gravel concrete and has a self-bearing structure. The floor element 1 has a topside 3, which functions during use as a walking surface, an underside 5, two cross sides 7 and two longitudinal sides 9. On the topside 3 the floor element 1 is provided with a slotted pattern consisting of a first group 13 of parallel straight slots 15 and a second group 17 of parallel straight slots 19, which are at an angle to the slots 15 of the first group 13. The slots 15, 19 form a rhombic pattern in the walking surface 1, in which the angles are not equal to 90°. The slots 15, 19 have a trapezium-shaped cross section in which both sides run toward each other downward, see Figure 2.

For the discharge of manure in the floor element 1 there are openings 21 all the way through, which extend from the topside 3 of the floor element 1 to the underside 5 of the floor element 1.

In Figure 2 a detail of the floor element 1 is shown at the site of an opening 21 present in the floor element. The openings 21 are located in the slots 19 of the floor element 1 outside the intersection of two slots 15 and 19 that intersect each other.

In a stable floor the floor elements 1 are located with their longitudinal sides 9 against each other. For extra discharge of manure the floor element 1 also has a notch 23 on a longitudinal side 9. The notch 23 is located at a distance from the cross sides 7 of the floor element 1. To prevent the notch 23 from becoming clogged, the surface of the notch 23 on the topside 3 of the floor element 1 is smaller than on the underside 5.

Although in the above the invention is explained on the basis of the drawings, it should be noted that the invention is in no way limited to the embodiment shown in the drawings. The invention also extends to all embodiments deviating from the embodiment shown in the drawings within the context defined by the claims. For example, the openings can run tapered downward to be better able to discharge the manure and to see to it that the openings become clogged less rapidly. The floor element can also run slightly tapered in its breadth in order to lead the manure to the notch.

## Claims

1. Floor element, in particular for use in a stable floor, provided with a topside, which functions during use as a walking surface and is provided with a slotted pattern, and an underside, which floor element also has openings for the passage of manure going all the way through it, which openings extend from the topside of the floor element to the underside of the floor element, characterised in that the floor element is chiefly of concrete and forms a self-bearing structure.

2. Floor element according to claim 1, characterised in that the floor element is chiefly of gravel concrete.

3. Floor element according to claim 1 or 2, characterised in that the sidewalls of the slots run downward toward each other.

4. Floor element according to claim 3, characterised in that the cross section of the slots is virtually trapezium-shaped.

5. Floor element according to claim 1, 2, 3 or 4, characterised in that the slotted pattern comprises a first group of parallel straight slots, as well as a second group of parallel straight slots, which are at an angle with the slots of the first group, whereby the openings on the topside of the floor element are present in the slots outside the intersections of the slots of the first group with the slots of the second group.

6. Floor element according to claim 5, characterised in that the slots of the first group together with the slots of the second group form a rhombic pattern of which the angles are unequal to 90°.

7. Floor element according to one of the preceding claims, characterised in that the floor element has a notch lengthwise for extra discharge of manure, which notch is at a distance from the cross sides of the floor element.

8. Floor element according to claim 7, characterised in that the surface of the notch on the topside of the floor element is smaller than on the underside.
